# EUROPÄISCHE PATENTSCHRIFT

(11) **EP 3 274 246 B1**
(45) Veröffentlichungstag und Bekanntmachung des Hinweises auf die Patenterteilung: **04.03.2020**
(21) Anmeldenummer: 16711683.9
(22) Anmeldetag: 24.03.2016
(51) Int. Cl.: B62D 25/04

(54) **KAROSSERIESTRUKTUR MIT EINSTÜCKIGEN UND ALS BOGENFÖRMIGE ROHRE AUSGEBILDETEN B-SÄULENVERSTÄRKUNGEN, SOWIE ENTSPRECHEND AUSGEBILDETE B-SÄULENVERSTÄRKUNG**
BODY STRUCTURE HAVING B-PILLAR REINFORCEMENTS FORMED INTEGRALLY AND AS CURVED TUBES, AND CORRESPONDINGLY FORMED B-PILLAR REINFORCEMENT
STRUCTURE DE CARROSSERIE COMPRENANT DES RENFORTS DE PIED MILIEU MONOBLOCS CONÇUS SOUS LA FORME DE TUBES CINTRÉS ET RENFORT DE PIED MILIEU CONÇU DE MANIÈRE CORRESPONDANTE

(30) Priorität: 25.03.2015 DE 102015205402
(43) Veröffentlichungstag der Anmeldung: 31.01.2018
(73) Patentinhaber: Bayerische Motoren Werke Aktiengesellschaft, 80809 München (DE)
(72) Erfinder: HARRISON, Robert, 84427 Sankt Wolfgang (DE); LOCH, Robert, 81379 München (DE)
(86) Internationale Anmeldenummer: PCT/EP2016/056665
(87) Internationale Veröffentlichungsnummer: WO 2016/151118

(56) Entgegenhaltungen:
- EP-A1- 2 143 621
- EP-A2- 1 382 513
- DE-A1- 4 016 730
- DE-A1- 19 603 098
- DE-A1-102008 024 274
- DE-T2- 60 006 010

## Beschreibung

Die Erfindung betrifft eine PKW-Karosseriestruktur mit B-Säulenverstärkungen, gemäß den im Oberbegriff des Patentanspruchs 1 angegebenen Merkmalen.

Die Erfindung betrifft ferner eine B-Säulenverstärkung bzw. eine Mittelsäulenverstärkung für eine PKW-Kraftfahrzeugkarosserie bzw. PKW-Karosseriestruktur.

Kraftfahrzeugkarosserien von Personenkraftwagen sollen stabil sein und den Insassen möglichst guten Schutz gewähren. Die Karosseriestrukturen moderner PKW-Kraftfahrzeugkarosserien werden u. a. im Hinblick auf Seitencrasheinwirkungen im Seitenbereich mit so genannten Säulenverstärkungen ausgestattet. Um Fahrzeugkarosserien bzw. Karosseriestrukturen im Bereich ihrer B-Säulen bzw. Mittelsäulen zu verstärken, sind aus dem Stand der Technik verschiedene Maßnahmen bekannt.

Eine im Stand der Technik weit verbreitete Maßnahme ist der Einsatz warmumgeformter oder pressgehärteter Blechformteile, wie bspw. in der DE 697 07 066 T2 und DE 10 2005 038 488 A1 beschrieben.

Eine andere aus dem Stand der Technik bekannte Maßnahme ist der Einsatz von Hohlprofilen, wie bspw. in der DE 10 2010 036 450 A1, DE 10 2008 024 274 A1 und DE 600 06 010 T2 beschrieben. Die EP 2 143 621 A1 zeigt eine Karosseriestruktur und deren B-Säulenverstärkung nach den Merkmalen des Oberbegriffs von Anspruch 1 und Anspruch 7.

Der Erfindung liegt die Aufgabe zugrunde, eine verbesserte PKW-Karosseriestruktur eingangs genannter Art zu schaffen, die sich insbesondere auch einfach und kostengünstig herstellen lässt.

Diese Aufgabe wird gelöst durch eine erfindungsgemäße Karosseriestruktur entsprechend dem Patentanspruch 1 und 7. Mit einem nebengeordneten Patentanspruch erstreckt sich die Erfindung auch auf eine erfindungsgemäße rohrartige B-Säulenverstärkung zur Verwendung in einer Kraftfahrzeugkarosserie bzw. einer erfindungsgemäßen Karosseriestruktur. Bevorzugte Weiterbildungen und Ausgestaltungen der Erfindung ergeben sich analog für beide Erfindungsgegenstände sowohl aus den abhängigen Patentansprüchen als auch aus den nachfolgenden Erläuterungen.

Die erfindungsgemäße PKW-Karosseriestruktur weist als Stahl-Hohlprofile ausgebildete B-Säulen- bzw. Mittelsäulenverstärkungen auf, die jeweils mit einem oberen Anbindungsabschnitt zur Anbindung an den Dachbereich der Karosseriestruktur und einem unteren Anbindungsabschnitt zur Anbindung an die Bodengruppe oder einen Seitenschweller der Karosseriestruktur ausgebildet sind, so dass sich diese B-Säulenverstärkungen an ihren Einbauorten auf der rechten und der linken Karosserieseite über die gesamte Karosseriehöhe erstrecken. Erfindungsgemäß ist nun vorgesehen, dass diese B-Säulenverstärkungen als einstückige Rohre (bzw. als rohrartige Hohlprofile) aus einem hochfesten Stahlmaterial gebildet sind, wobei diese Rohre zwischen ihren unteren Anbindungsabschnitten und ihren oberen Anbindungsabschnitten einen bogenförmigen Verlauf mit konstantem Krümmungsradius bzw. Bogenradius aufweisen.

Erfindungsgemäß sind die Rohre über ihren gesamten axialen Verlauf mit einem konstanten Krümmungsradius ausgebildet und weisen somit einen radiuskonstanten Bogenverlauf auf. Unter einem Rohr wird allgemein ein länglicher Hohlkörper verstanden, der insbesondere einen einzelnen im Querschnitt geschlossenen Hohlraum aufweist. Es sind verschiedenste Querschnittsformen möglich, wobei Rundquerschnitte, insbesondere Oval- oder Kreisquerschnitte, bevorzugt sind (so genannte Rundrohre, die einen Durchmesser von bspw. 30 mm bis 70 mm aufweisen können). Allerdings können auch nicht-runde bzw. mehreckige oder komplexere Querschnittsformen, die z. B. auch wenigstens einen konkaven Abschnitt aufweisen können, vorgesehen sein. Besonders bevorzugt ist vorgesehen, dass die Rohre über ihrer Längserstreckung mit gleichbleibenden Querschnitten bzw. mit einem konstanten Querschnitt ausgebildet sind. Unter einem hochfesten Stahlmaterial wird ein Stahlmaterial verstanden, dass eine Zug- bzw. Zerreißfestigkeit von wenigstens 1200 MPa und bevorzugt von wenigstens 1400 MPa aufweist.

Ein Vorteil der Erfindung ist darin zu sehen, dass aus einem hochfesten Stahlmaterial gebildete Rohre mit einem radiuskonstanten bzw. gleichförmigen Bogenverlauf vergleichsweise günstig hergestellt werden können. (Ein bevorzugtes Herstellverfahren wird nachfolgend noch näher erläutert.) Ein weiterer Vorteil ist darin zu sehen, dass für die rechte und die linke Karosserieseite identische Rohre verwendbar sind. Ferner können die bspw. mit einer bestimmten Länge bereitgestellten Rohre durch Kürzen an unterschiedliche Fahrzeugtypen angepasst werden.

Sicherheitsgurt-, Türschloss-, Türscharnierbefestigungen und/oder dergleichen können direkt an den bogenförmigen Rohren angeschweißt sein. Die stabilen Rohre können damit zugleich auch der Anbindung der betreffenden Bauteile und der damit einhergehenden Krafteinleitung in die Karosseriestruktur dienen.

Die Rohre können mittels oberer und unterer Halteelemente in die Karosseriestruktur eingebunden sein, wobei die Rohre an ihren oberen und unteren Anbindungsabschnitten stoffschlüssig (bspw. durch Verschweißen oder Verlöten) und/oder formschlüssig (bspw. durch entsprechend ausgebildete Aufnahmen an den Halteelementen) mit diesen Halteelementen verbunden sein können. Die Halteelemente weisen Verbindungsabschnitte auf, mit denen diese am Dachbereich bzw. an der Bodengruppe oder den Seitenschwellern befestigt werden können. Die Befestigung kann bspw. durch Verschweißen, Verlöten, Verkleben, Vernieten und/oder Verschrauben erfolgen. Die Halteelemente sind bevorzugt aus Metall gebildet und können bspw. als Gussteile, Schweißteile oder Umformteile hergestellt sein. Die Halteelemente können aber auch aus Verbundwerkstoffen, bspw. CFK oder GFK, insbesondere mit metallischen Einlegern, gebildet sein. Bevorzugt sind die Halteelemente derart ausgebildet, dass diese bei einem Seitencrash auf Druck bzw. auf Pressung belastet werden.

Bei der Karosseriestruktur kann es sich um eine so genannte Leichtbaustruktur handeln, die zahlreiche Aluminium- und/oder Faserverbund-Komponenten aufweist.

Bevorzugt sind zumindert der Dachbereich bzw. die Dachlängsträger, die Bodengruppe und/oder die Seitenschweller aus einem Faserverbundmaterial, insbesondere CFK oder GFK, gebildet. Insbesondere in diesem Fall ist vorgesehen, dass die Halteelemente mit diesen aus Faserverbundmaterial gebildeten Komponenten verklebt sind. Alternativ kann bspw. auch eine Verschraubung und/oder Vernietung vorgesehen sein.

Die mit dem nebengeordneten Patentanspruch beanspruchte erfindungsgemäße B-Säulen- bzw. Mittelsäulenverstärkung ist analog zu den vorausgehenden Erläuterungen dadurch gekennzeichnet, dass diese als einstückiges Rohr aus einem hochfesten Stahlmaterial gebildet ist, wobei dieses Rohr zwischen seinem unteren Anbindungsabschnitt bzw. seinem unteren Ende und seinem oberen Anbindungsabschnitt bzw. seinem oberen Ende einen bogenförmigen Verlauf mit konstantem Krümmungsradius aufweist.

Erfindungsgemäß handelt es sich um ein rollprofiliertes und lasernahtgeschweißtes Rohr. Das Rollprofilieren ist ein kontinuierlicher Umformprozess, bei dem in einer Rollprofilieranlage aus einem zugeführten Blechstreifen (der typischerweise von einem Coil abgewickelt wird) in mehreren Umformstufen mit drehenden Umformwerkzeugen (in der Regel sind dies Rollenpaare) sukzessive ein Rohrstrang geformt wird (Endlosfertigung). Die Umformung erfolgt kalt und ohne aktive Gefügebeeinflussung. Die durch das Umformen aneinanderstoßenden Blechränder werden unter Ausbildung einer Laserlängsnaht miteinander laserverschweißt (oder gegebenenfalls auch nur laserverlötet). Das Laserschweißen (oder gegebenenfalls Laserlöten) erfolgt bevorzugt noch innerhalb der Rollprofilieranlage. Auch das Erzeugen der Bogenform kann noch innerhalb der Rollprofilieranlage erfolgen. Der auf diese Weise kontinuierlich hergestellte Rohrstrang muss am Ausgang der Rollprofilieranlage lediglich noch abgelängt werden. Die stückfallend hergestellten Rohre weisen Endgeometrie auf, d. h. weitere Umformschritte sind nicht vorgesehen.

Ein Vorteil des Rollprofilierens ist darin zu sehen, dass als Ausgangsmaterial bereits ein hochfestes Stahlblechmaterial (bspw. mit wenigstens 1200 MPa und bevorzugt mit wenigstens 1400 MPa) verwendet wird. Das verwendete hochfeste Stahlblechmaterial weist bspw. eine homogen Blechdicke von 2 mm bis 4 mm auf. (Grundsätzlich sind auch Blechstreifen mit inhomogener Blechdicke verwendbar.) Bei Erhaltung der Blechdicke können die als Säulen- bzw. Mittelsäulenverstärkung dienenden Rohre somit eine im Wesentlichen homogene Wanddicke von 2 mm bis 4 mm aufweisen. Gegenüber dem Warmumformen oder Presshärten entstehen z. T. erhebliche Energie-, Umwelt- und Kostenvorteile. Ferner können die rollprofilierten Rohre eine bessere Gefüge- und/oder Oberflächenqualität aufweisen.

Die erfindungsgemäße B-Säulenverstärkung kann angeschweißte oder angelötete Sicherheitsgurt-, Türschloss-, Türscharnierbefestigungen oder dergleichen aufweisen. Ferner kann die B-Säulenverstärkung an ihrem oberen Ende mit einem oberen Halteelement und an ihrem unteren Ende mit einem unteren Halteelement (für die Einbindung in eine PKW-Karosseriestruktur) verbunden sein. Die erfindungsgemäße B-Säulenverstärkung kann auch eine Beschichtung, bspw. eine KTL-Beschichtung, oder zumindest eine Korrosionsschutzbeschichtung, bspw. eine Zinkbeschichtung (Verzinkung) oder Aluminiumbeschichtung, aufweisen. Bevorzugt deckt die Beschichtung auch etwaige Sicherheitsgurt-, Türschloss- und/oder Türscharnierbefestigungen ab. Besonders bevorzugt ist vorgesehen, dass die Beschichtung bzw. Korrosionsschutzbeschichtung schon auf dem für das Rollprofilieren verwendeten Ausgangsmaterial (Stahlblechmaterial) aufgebracht ist. Eine entsprechend ausgebildete B-Säulenverstärkung kann als Fertigteil bereitgestellt und in eine Karosseriestruktur eingebunden bzw. eingefügt werden. Die Erfindung wird nachfolgend anhand der Figuren beispielhaft und in nicht einschränkender Weise näher erläutert.

Es zeigen jeweils mit perspektivischer Darstellung:
- Fig. 1: eine erfindungsgemäße PKW-Karosseriestruktur, und
- Fig. 2: eine erfindungsgemäße Mittel- bzw. B-Säulenverstärkung.

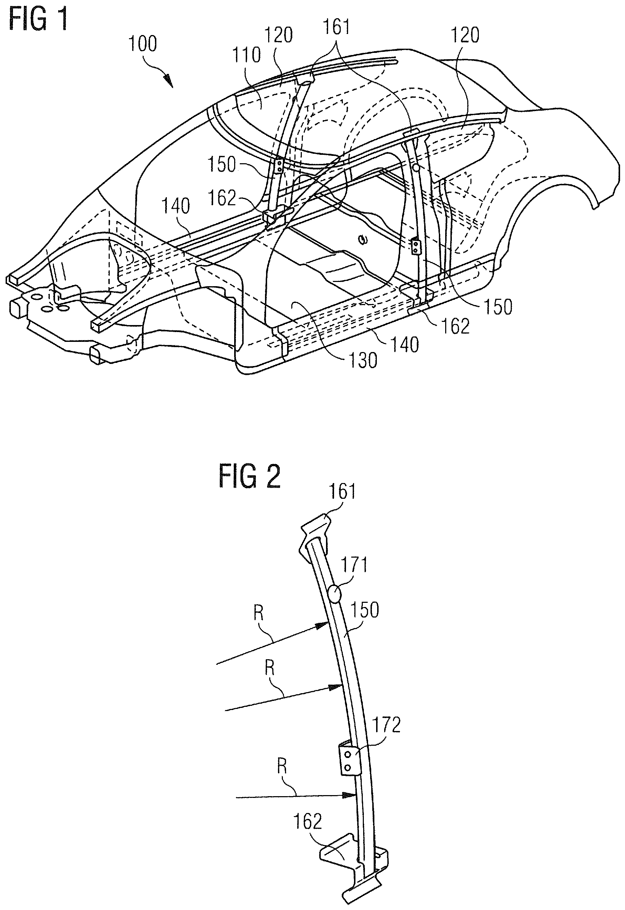

Fig. 1 zeigt eine PKW-Karosseriestruktur 100 mit einem Dachbereich 110 und einer Bodengruppe 130. Die Karosseriestruktur 100 weist ferner zwei Dachlängsträger 120 und zwei Seitenschweller 140 auf. Zumindest die Dachlängsträger 120 und/oder die Seitenschweller 140 können auch aus einem Faserverbundwerkstoff, bspw. CFK oder GFK, gebildet sein.

Im Mittelbereich der Karosseriestruktur 100 sind auf beiden Karosserieseiten Mittel- bzw. B-Säulen vorhanden, die mit Säulenverstärkungen 150 ausgestattet sind. Erfindungsgemäß sind diese Mittel- bzw. B-Säulenverstärkungen 150 als einstückige Rohre aus einem hochfesten Stahlmaterial gebildet, wobei die Rohre einen bogenförmigen Verlauf mit konstantem Krümmungsradius R (siehe Fig. 2) aufweisen. Bevorzugt handelt es sich um rollprofilierte und lasernahtgeschweißte Rohre, die in einem Stück (d. h. nicht aus mehreren miteinander gefügten Stücken) hergestellt sind.

Die als Rohre ausgebildeten Säulenverstärkungen 150 sind mit ihren oberen Enden an die Dachlängsträger 120 und mit ihren unteren Enden an die Seitenschweller 140 angebunden. Die Anbindung erfolgt indirekt mittels oberen Halteelementen 161 und unteren Halteelementen 162, wobei die Halteelemente 161 und 162 derart ausgebildet sind, dass diese bei einem Seitencrash auf Druck belastet werden, wobei dies auch bei der gesamten Befestigungskonstruktion für die B-Säulenverstärkungen 150 berücksichtigt ist. Die Halteelemente 161 und 162 können auch als Säulenfüße bezeichnet werden.

Fig. 2 zeigt in einer vergrößerten Detaildarstellung eine erfindungsgemäße B-Säulenverstärkung 150 zusammen mit einem oberen Halteelement 161 und einem unteren Halteelement 162. Die Halteelemente 161 und 162 sind beispielhaft als Blechformteile ausgebildet. An seinem oberen Ende bzw. seinem oberen Anbindungsabschnitt ist das Rohr 150 mit dem oberen Halteelement 161 verschweißt oder verlötet (gegebenenfalls auch verklebt). An seinem unteren Ende bzw. seinem unteren Anbindungsabschnitt ist das Rohr 150 formschlüssig in einer klammerartig ausgebildeten Aufnahme des unteren Halteelements 162 aufgenommen und zusätzlich verschweißt oder verlötet (gegebenenfalls auch verklebt). Am Rohr 150 sind ferner eine Sicherheitsgurtbefestigung 171 und eine Türschlossbefestigung 172 angeschweißt oder angelötet.

Die B-Säulenverstärkung 150 kann gemäß Fig. 2 vorbereitet werden und in die Karosseriestruktur 100 eingebunden werden. Die Verbindung mit den Halteelementen 161 und 162 kann beim Einbau in die Karosseriestruktur 100 oder bereits vor dem Einbau erfolgen. Der Einbau erfolgt so, dass der Krümmungsbogen ins Fahrzeuginnere weist bzw. gerichtet ist. Die Halteelemente 161 und 162 weisen verhältnismäßig großflächige Verbindungsabschnitte auf, mit denen eine flächige und auch formschlüssige Verbindung zum Dachlängsträger 120 bzw. Seitenschweller 140 hergestellt werden kann. Bei einem Seitencrash wird durch die großflächige Auflage auch eine sehr gute Krafteinleitung in den Dachlängsträger 120 bzw. Seitenschweller 140 ermöglicht. Die Befestigung am Dachlängsträger 120 bzw. Seitenschweller 140 kann bspw. durch Verkleben, Verschweißen, Verlöten, Verschrauben, Vernieten oder dergleichen erfolgen.

Wie aus Fig. 2 sehr gut ersichtlich, weist das als Säulenverstärkung dienende Rohr 150 einen bogenförmigen Verlauf mit konstantem Krümmungs- bzw. Bogenradius R auf. Ferner ist das Rohr 150 über seiner Längserstreckung mit einem gleichbleibenden bzw. konstanten Rundquerschnitt ausgebildet, wobei auch andere und insbesondere nicht-runde Querschnittsformen möglich sind.

### Bezugszeichenliste

### Karosseriestruktur mit einstöckigen und als bogenförmige Rohre ausgebildeten B-Säulenverstärkungen, sowie entsprechend ausgebildete B-Säulenverstärkung

- 100: Karosseriestruktur (PKW)
- 110: Dachbereich
- 120: Dachlängsträger
- 130: Bodenbereich
- 140: Seitenschweller
- 150: B-Säulenverstärkung, Mittelsäulenverstärkung
- 161: oberes Halteelement
- 162: unteres Halteelement
- 171: Sicherheitsgurtbefestigung
- 172: Türschlossbefestigung
- R: Krümmungsradius, Bogenradius

## Patentansprüche

1. Karosseriestruktur (100) für einen Personenkraftwagen, deren B-Säulenverstärkungen (150) als Stahl-Hohlprofile ausgebildet sind, die jeweils einen oberen Anbindungsabschnitt zur Anbindung an den Dachbereich (110, 120) und einen unteren Anbindungsabschnitt zur Anbindung an die Bodengruppe (130) oder einen Seitenschweller (140) aufweisen, wobei die B-Säulenverstärkungen (150) als einstückige Rohre aus einem hochfesten Stahlmaterial gebildet sind,
**dadurch gekennzeichnet, dass**
die Rohre (150) durch kaltes Rollprofilieren eines hochfesten Ausgangsstahlblechmaterials und Lasernahtschweißen hergestellt sind und zwischen ihren unteren Anbindungsabschnitten und ihren oberen Anbindungsabschnitten einen bogenförmigen Verlauf mit im Wesentlichen konstantem Krümmungsradius (R) aufweisen, derart, dass die Rohre (150) über ihren gesamten axialen Verlauf mit einem konstanten Krümmungsradius (R) ausgebildet sind und somit einen radiuskonstanten Bogenverlauf aufweisen.

2. Karosseriestruktur (100) nach Anspruch 1,
**dadurch gekennzeichnet, dass**
Sicherheitsgurt-, Türschloss- und/oder Türscharnierbefestigungen (171, 172) an den Rohren (150) angeschweißt oder angelötet sind.

3. Karosseriestruktur (100) nach Anspruch 1 oder 2,
**dadurch gekennzeichnet, dass**
die Rohre (150) mittels oberen Halteelementen (161) und unteren Halteelementen (162) in die Karosseriestruktur (100) eingebunden sind, wobei die Rohre (150) an ihren Anbindungsabschnitten stoffschlüssig und/oder formschlüssig mit diesen Halteelementen (161, 162) verbunden sind.

4. Karosseriestruktur (100) nach Anspruch 3,
**wobei**
die Halteelemente (161, 162) derart ausgebildet sind, dass diese bei einem Seitencrash auf Druck belastet werden.

5. Karosseriestruktur (100) nach einem der vorhergehenden Ansprüche,
**dadurch gekennzeichnet, dass**
der Dachbereich (110), insbesondere die Dachlängsträger (120), die Bodengruppe (130) und/oder die Seitenschweller (140) aus einem Faserverbundmaterial gebildet sind.

6. Karosseriestruktur (100) nach Anspruch 3 und 5, oder nach Anspruch 4 und 5,
**dadurch gekennzeichnet, dass**
die Halteelemente (161, 162) mit diesen aus Faserverbundmaterial gebildeten Komponenten verklebt sind.

7. B-Säulenverstärkung (150) für eine Kraftfahrzeugkarosserie (100), welche als Stahl-Hohlprofil ausgebildet ist und einen oberen Anbindungsabschnitt zur Anbindung an den Dachbereich (110) der Kraftfahrzeugkarosserie (100) und einen unteren Anbindungsabschnitt zur Anbindung an die Bodengruppe (130) oder einen Seitenschweller (140) der Kraftfahrzeugkarosserie (100) aufweist, wobei diese B-Säulenverstärkung (150) als einstückiges Rohr aus einem hochfesten Stahlmaterial gebildet ist,
**dadurch gekennzeichnet, dass**
dieses Rohr (150) durch kaltes Rollprofilieren eines hochfesten Ausgangsstahlblechmaterials und Lasernahtschweißen hergestellt ist und zwischen seinem unteren Anbindungsabschnitt und seinem oberen Anbindungsabschnitt einen bogenförmigen Verlauf mit konstantem Krümmungsradius (R) aufweist, derart, dass das Rohr (150) über seinen gesamten axialen Verlauf mit einem konstanten Krümmungsradius (R) ausgebildet ist und somit einen radiuskonstanten Bogenverlauf aufweist.

8. B-Säulenverstärkung (150) nach Anspruch 7,
**dadurch gekennzeichnet, dass**
diese angeschweißte Sicherheitsgurt-, Türschloss- und/oder Türscharnierbefestigungen (171, 172) aufweist.

9. B-Säulenverstärkung (150) nach Anspruch 7 oder 8,
**dadurch gekennzeichnet, dass**
diese eine Beschichtung aufweist.

## Claims

1. A bodywork structure (100) for a passenger car, the B-pillar reinforcements (150) of which are designed as hollow steel profiles which in each case have an upper attachment portion for attaching to the roof region (110, 120) and a lower attachment portion for attaching to the floor assembly (130) or a side sill (140), wherein the B-pillar reinforcements (150) are formed as one-piece tubes made of a high-strength steel material,
**characterised in that**
the tubes (150) are produced by cold roll-forming of a high-strength starting steel sheet material and laser seam welding and have between their lower attachment portions and their upper attachment portions an arcuate course with a substantially constant radius of curvature (R), in such a way that the tubes (150) over their entire axial course are designed with a constant radius of curvature (R) and thus have a curved course of constant radius.

2. A bodywork structure (100) according to Claim 1,
**characterised in that**
seat-belt anchoring means, door-lock fastening means and/or door-hinge fastening means (171, 172) are welded or soldered onto the tubes (150).

3. A bodywork structure (100) according to Claim 1 or Claim 2,
**characterised in that**
the tubes (150) are integrated in the bodywork structure (100) by means of upper holding elements (161) and lower holding elements (162), wherein the tubes (150) are connected to these holding elements (161, 162) at their attachment portions by a material-formed bond and/or in positive manner.

4. A bodywork structure (100) according to Claim 3,
**wherein**
the holding elements (161, 162) are designed in such a way that they are subjected to compression loading in the event of a side crash.

5. A bodywork structure (100) according to one of the preceding claims,
**characterised in that**
the roof region (110), especially the roof rails (120), the floor assembly (130) and/or the side sills (140) are formed from a fibre composite material.

6. A bodywork structure (100) according to Claim 3 and 5, or according to Claim 4 and 5,
**characterised in that**
the holding elements (161, 162) are bonded to these components which are formed from fibre composite material.

7. A B-pillar reinforcement (150) for a motor vehicle body (100), which is designed as a hollow steel profile and has an upper attachment portion for attaching to the roof region (110) of the motor vehicle bodywork (100) and a lower attachment portion for attaching to the floor assembly (130) or a side sill (140) of the motor vehicle bodywork (100), wherein this B-pillar reinforcement (150) is formed as a one-piece tube made of a high-strength steel material,
**characterised in that**
this tube (150) is produced by cold roll-forming of a high-strength starting steel sheet material and laser seam welding and has between its lower attachment portion and its upper attachment portion an arcuate course with a constant radius of curvature (R), in such a way that the tube (150) over its entire axial course is designed with a constant radius of curvature (R) and thus has a curved course of constant radius.

8. A B-pillar reinforcement (150) according to Claim 7,
**characterised in that**
it has welded-on seat-belt anchoring means, door-lock fastening means and/or door-hinge fastening means (171, 172).

9. A B-pillar reinforcement (150) according to Claim 7 or Claim 8,
**characterised in that**
it has a coating.

## Revendications

1. Structure de carrosserie (100) destinée à un véhicule automobile de tourisme dont les renforts de piliers B (150) sont réalisés sous la forme de profilés creux en acier qui comportent chacun un segment de liaison supérieur pour permettre leur liaison à la zone de toit (110, 120) et un segment de liaison inférieur pour permettre leur liaison à l'ensemble de plancher (130) ou à un seuil latéral (140), les renforts de piliers B (150) étant réalisés sous la forme de tubes en une seule pièce en un acier de grande résistance,
**caractérisée en ce que**
les tubes (150) sont réalisés par profilage au rouleau à froid d'une tôle d'acier de départ de grande résistance et soudage de joint par laser, et ont entre leurs segments de liaison inférieurs et leurs segments de liaison supérieurs un tracé en forme d'arc ayant un rayon de courbure (R) essentiellement constant de sorte que les tubes (150) soient formés sur la totalité de leur extension axiale avec un rayon de courbure constant et aient ainsi un tracé en arc ayant un rayon constant.

2. Structure de carrosserie (100) conforme à la revendication 1,
**caractérisée en ce que**
des renforts de ceinture de sécurité, de serrure de porte et/ou de charnière de porte (171, 172) sont soudés ou brasés sur les tubes (150).

3. Structure de carrosserie (100) conforme à la revendication 1 ou 2,
**caractérisée en ce que**
les tubes (150) sont intégrés dans la structure de carrosserie (100) au moyen d'éléments de retenue supérieurs (161) et d'éléments de retenue inférieurs (162), et sont reliés à ces éléments de retenue (161, 162) par une liaison par la matière et/ou par une liaison par le forme au niveau de leurs segments de liaison.

4. Structure de carrosserie (100) conforme à la revendication 3,
dans laquelle
les éléments de retenue (161, 162) sont réalisés de sorte qu'ils soient chargés en compression en cas de collision latérale.

5. Structure de carrosserie (100) conforme à l'une des revendications précédentes,
**caractérisée en ce que**
la zone de toit (110) en particulier les longerons de toit (120), l'ensemble de plancher (130) et/ou les seuils latéraux (140) sont réalisés en un matériau composite renforcé par des fibres.

6. Structure de carrosserie (100) conforme aux revendications 3 et 5, ou aux revendications 4 et 5,
**caractérisée en ce que**
les éléments de retenue (161, 162) sont collés aux composants réalisés en un matériau composite renforcé par des fibres.

7. Renfort de pilier B (150) destiné à une carrosserie de véhicule automobile (100) qui est réalisé sous la forme d'un profilé creux en un acier et comporte un segment de liaison supérieur destiné à être relié à la zone de toit (110) de la carrosserie du véhicule automobile (100) et un segment de liaison inférieur destiné à être relié à l'ensemble de plancher (130) ou à un seuil latéral (140) de la carrosserie du véhicule automobile (100), ce renfort de pilier B (150) étant réalisé sous la forme d'un tube en une seule pièce en un acier de grande résistance,
**caractérisé en ce que**
le tube (150) est obtenu par profilage au rouleau à froid d'une tôle d'acier de départ de grande résistance et soudage de joint au laser, et a entre son segment de liaison inférieur et son segment de liaison supérieur un tracé en forme d'arc ayant un rayon de courbure (R) constant de sorte que le tube (150) soit formé sur la totalité de son extension axiale avec un rayon de courbure (R) constant et ait ainsi un tracé en arc ayant rayon constant.

8. Renfort de pilier B (150) conforme à la revendication 7,
**caractérisé en ce qu'**
il comporte des fixations de ceinture de sécurité, de serrure de porte et/ou charnière de porte (171, 172) soudées.

9. Renfort de pilier B (150) conforme à la revendication 7 ou 8,
**caractérisé en ce qu'**
il comporte un revêtement.
